Europäisches Patentamt

European Patent Office

Office européen des brevets

(11) Veröffentlichungsnummer: **0 302 514**

**A2**

(12) **EUROPÄISCHE PATENTANMELDUNG**

(21) Anmeldenummer: 88112791.4

(51) Int. Cl.⁴: **C01F 5/24**

(22) Anmeldetag: 05.08.88

(30) Priorität: 06.08.87 CS 5837/87

(43) Veröffentlichungstag der Anmeldung:
08.02.89 Patentblatt 89/06

(84) Benannte Vertragsstaaten:
AT CH DE GB LI

(71) Anmelder: **USTAV PRO VYZKUM RUD**

**CS-25210 Mnisek pod Brdy(CS)**

(72) Erfinder: **Bumbálek, Václav, Dipl.-Ing.**
**Nad Kajetánkou 25**
**Praha 6(CS)**
Erfinder: **Horák, Václav, Dipl.-Ing.**
**Pomezni 1369/10**
**Praha 8(CS)**
Erfinder: **Zurek, Frantisek, CSc., Dipl.-Ing.**
**Jeremenkova 62**
**Praha 4(CS)**
Erfinder: **Prokleska, Frantisek, Dipl.-Ing.**
**Mánesova 44**
**Praha 2(CS)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) Verfahren zur Gewinnung von wasserfreiem Magnesiumcarbonat.

(57) Die Erfindung betrifft ein Verfahren zur Gewinnung von wasserfreiem Magnesiumcarbonat aus Magnesiumsalzlösungen oder aus Suspensionen von schwerlöslichen Magnesiumverbindungen, beispielsweise Nesquehonit, Magnesiumhydroxid udgl. Die Lösung oder Suspension wird mit Ammoniumcarbonat, mit Alkalimetallcarbonat oder mit Kohlendioxid so vermischt, daß das Molverhältnis $MgO : CO_2 \leq 2{,}0$ ist, worauf in einem Autoklaven bei einer Temperatur $\geq 110\,^\circ C$ zersetzt wird. Das wasserfreie Magnesiumcarbonat wird von der Mutterlauge abgetrennt, aus der das Ammoniak durch Zugabe von Calciumhydroxid, Alkalimetallhydroxiden oder einem calcinierten magnesiumhaltigen Rohstoff regeneriert wird, wodurch gleichzeitig eine Magnesiumsalzlösung gewonnen wird.

## Verfahren zur Gewinnung von wasserfreiem Magnesiumcarbonat

Die Erfindung betrifft ein Verfahren zur Gewinnung von wasserfreiem Magnesiumcarbonat aus Salzlösungen natürlichen oder synthetischen Ursprungs oder aus wäßrigen Suspensionen von schwerlöslichen natürlichen oder synthetisch hergestellten Magnesiumverbindungen, beispielsweise Nesquehonit $MgCO_3 \cdot 3H_2O$, Lansfordit $MgCO_3 \cdot 5H_2O$ udgl., basischen Carbonaten, beispielsweise Hydromagnesit $Mg_2$-$(MgOH)_2(CO_3)_3 \cdot 3H_2O$, Artinit $(MgOH)_2CO_3 \cdot 3H_2O$ udgl., Zersetzungsprodukten des Magnesiumhydrogencarbonats, beispielsweise $5 MgO \cdot 4 CO_2 \cdot 5H_2O$, $3 MgCO_3 \cdot Mg(OH)_2 \cdot 5H_2O$ udgl., Magnesiumoxid, Magnesiumhydroxid udgl., oder aus Suspensionen von schwerlöslichen Magnesiumverbindungen in Wasser oder Magnesiumsalzlösungen.

Nach dem gegenwärtigen Stand der Technik gibt es mehrere technische Verfahren, nach denen Magnesiumverbindungen aus in der Industrie anfallenden Lösungen gewonnen werden können und die in der Mehrzahl der Fälle auf die Herstellung von Magnesiumoxid, Magnesiumklinker oder Magnesiumverbindungen abgestellt sind. Die Fällung des hydratisierten Magnesiumcarbonats oder von basischen Magnesiumcarbonaten verschiedenartiger Zusammensetzung aus Magnesiumsalzlösungen ist bekannt und wird als zentrale Reaktion bei der großtechnischen Herstellung von Magnesiumoxid entweder zur Gewinnung geeigneter Zwischenprodukte oder bei der Raffination zur Trennung von Magnesium von Calcium angewandt.

Die Fällung hydratisierter Magnesiumcarbonate mit einer Ammoniumcarbonatlösung bei Temperaturen bis 50 °C und einem geregelten pH-Wert des Reaktionsgemisches wird bei der Aufarbeitung von Magnesiumchloridlösungen durchgeführt. Dabei wird ein gut filtrierbares kristallines Produkt, Nesquehonit $MgCO_3 \cdot 3H_2O$, erhalten, das getrocknet und thermisch zum Magnesiumoxid zersetzt wird. Wegen der Löslichkeit des Nesquihonits im vorliegenden Medium beträgt die Restkonzentration an Magnesiumchlorid im Filtrat 16 bis 18 g/l, so daß bei der Verarbeitung von Lösungen mit einer industriell annehmbaren Konzentration die Ausbeute an Magnesium bei der Fällung 85 bis höchstens 88 % beträgt. Der abfiltrierte Nesquehonit aus der Vakuumfiltration enthält mehr als 30 Masse-% Feuchtigkeit; das im $MgCO_3 \cdot 3H_2O$ gebundene Kristallwasser stellt 39 Masse-% dar.

Ein weiteres Verfahren zur Herstellung von Magnesiumcarbonat ist aus SU-A-701 943 bekannt. Bei diesem Verfahren wird aus einer Magnesiumionen enthaltenden Lösung durch Zusatz einer Sodalösung basisches Magnesiumcarbonat ausgefällt. Das Fällungsprodukt wird in einem 7 bis 12 % Kohlendioxid enthaltenden Gasstrom bei 200 bis 250 °C zum wasserfreien Carbonat getrocknet.

Von technischem Interesse sind ferner Lösungen von Magnesiumhydrogencarbonat, deren Zersetzung durch Beseitigung des Kohlendioxidüberschusses unter vermindertem Druck oder durch Erhitzen der Lösungen auf Temperaturen im Bereich von 30 bis 100 °C durchgeführt wird. Hierbei können Nesquehonit, basische Magnesiumcarbonate beispielsweise Hydromagnesit, Artinit, das basische Carbonate $3 MgCO_3 \cdot Mg(OH)_2 \cdot 5H_2O$ oder Gemische dieser Verbindungen, ggfs. zusammen mit ähnlichen Verbindungen, entstehen. Alle diese als Magnesiumcarbonate bezeichneten Verbindungen können Zwischenprodukte bei der sog. Hydrogencarbonattechnik bei der Herstellung von Magnesiumoxid darstellen.

Wasserfreies Magnesiumcarbonat $MgCO_3$ kann allerdings bei der Entcarbonisierung von Lösungen von Magnesiumhydrogencarbonat bei Zersetzungstemperaturen bis 100 °C nicht entstehen.

Aus SU-A-368 188 ist ferner ein Verfahren zur Abtrennung von Magnesium von Calcium bekannt, das über die Bildung von Magnesiumhydrogencarbonat und dessen Zersetzung bei erhöhter Temperatur zu reinem Magnesiumcarbonat führt.

Ein ähnliches Verfahren zur Herstellung von Magnesiumcarbonat ist aus DE-A1--3 101 293 bekannt, bei dem Magnesiumhydroxid mit Hilfe von Kohlendioxid in Magnesiumhydrogencarbonat übergeführt wird. Dabei erfolgt die Bildung von Magnesium- und Calciumcarbonat, die sich aus der Lösung ausscheiden. Nach ihrer Abtrennung wird die Lösung entweder durch Erhitzen oder im Vakuum entcarbonisiert, worauf das ausgeschiedene hydratisierte Magnesiumcarbonat von der flüssigen Phase abgetrennt wird.

Ein Verfahren zur Herstellung eines besonderen, blättchenförmigen basischen Magnesiumcarbonats mit Gehalt an Calciumcarbonat für Zwecke der Papierindustrie ist aus EP-A- 10643 bekannt, bei dem eine verdünnte carbonisierte Suspension von gebranntem Dolomit unter Druck zerstzt wird.

Ein Verfahren zur Gewinnung eines haltbaren Produkts aus Nesquehonit ist aus SU-A-622 497 bekannt, das auf einer geregelten Erhitzung von Nesquehonit auf 90 bis 100 °C und Aufrechterhaltung dieser Endtemperatur während 3 bis 5 min beruht. Als Produkt wird basisches Magnesiumcarbonat erhalten.

Bei der chemischen Herstellung von Magnesiumoxid werden in einigen Fällen verhältnismäßig verdünnte Magnesiumsalzlösungen verarbeitet, beispielsweise bei der Herstellung von Magnesiumoxid aus Meerwasser oder aus natürlichen Magnesiumsalzlösungen mit niederem Magnesiumgehalt.

In diesen Fällen wird Magnesiumhydroxid ausgefällt, das dann in sehr aufwendiger Weise entwässert wird und außerdem Konstitutions- bzw. Kristallwasser noch eine Restfeuchtigkeit von 30 bis 50 Masse-% aufweist. In allen angeführten Fällen, wo bei der Herstellung von Magnesiumoxid Zwischenprodukte mit einem verhältnismäßig hohen Gehalt an Konstitutionswasser und Feuchtigkeit anfallen, wird bei der Entwässerung, ggfs. bei der Calcinierung, eine beträchtliche Wärmeenergiemenge verbraucht. Außerdem lassen sich in einigen Fällen diese Zwischenprodukte nur schwierig entwässern; ferner ist bei der Filtration eine große Filtrierfläche erforderlich, wobei zugleich beträchtliche Mengen verdünnter Waschlösungen anfallen. Bei der Fällung von Nesquehonit werden darüber hinaus nur verhältnismäßig geringe Ausbeuten an Magnesium erzielt.

Der Erfindung liegt die Aufgabe zugrunde, unter Beseitigung der mit den herkömmlichen Verfahren verbundenen Nachteile ein Verfahren zur Gewinnung von wasserfreiem Magnesiumcarbonat aus entsprechenden Salzlösungen oder Suspensionen schwerlöslicher Magnesiumverbindungen anzu geben, das in einfacher Weise durchführbar ist und ohne zu großen Energieverbrauch und ohne aufwendige Apparaturen zu wasserfreiem Magnesiumcarbonat führt, wobei das Verfahren auch kontinuierlich durchführbar sein soll.

Die Aufgabe wird gemäß Anspruch 1 gelöst.

Die abhängigen Ansprüche betreffen vorteilhafte Ausführungsformen des Verfahrens.

Das erfindungsgemäße Verfahren zur Gewinnung von wasserfreiem Magnesiumcarbonat aus Magnesiumsalzlösungen oder aus Suspensionen von schwerlöslichen Magnesiumverbindungen, basischen Carbonaten, Magnesiumhydroxid udgl. in Wasser oder in Magnesiumsalzlösungen ist gekennzeichnet durch

(A) Einstellung eines Molverhältnisses MgO : $CO_2$ im Reaktionsgemisch auf einen Wert $\leq 2,0$ mit Ammoniumcarbonat, Ammoniumhydrogencarbonat, einem Alkalimetallcarbonat und/oder einem Alkalimetallhydrogencarbonat oder mit Kohlendioxid, ggfs. unter Zugabe von Ammoniak oder einem Alkalimetallhydroxid, in der Lösung oder Suspension,

(B) Erhitzen des Reaktionsgemisches in einem geschlossenem Raum auf eine Temperatur $\geq 110\,°C$ und bei einem dieser Temperatur entsprechenden Druck und

(C) Abtrennung der festen Phase von der Mutterlauge nach Druckausgleich.

Die Umsetzung, die sich kontinuierlich oder absatzweise durchführen läßt, verläuft in Abhängigkeit von der Temperatur innerhalb von 2 min bis 10 h. Nach dem Druckausgleich werden das ggfs. im Überschuß anwesende Ammoniak und Kohlendioxid freigesetzt; beide Gase können durch Absorption zurückgewonnen werden.

Nach Abtrennen des wasserfreien Magnesiumcarbonats wird aus der ammoniumsalzhaltigen Lösung Ammoniak durch Zusatz von Calciumhydroxid oder eines Alkalimetallhydroxids regeneriert oder durch Umsetzung mit einem calcinierten magnesiumoxidhaltigen Rohstoff gleichzeitig eine Überführung des Magnesiums in die Lösung erzielt.

Die Erfindung wird im folgenden anhand von Ausführungsbeispielen näher erläutert.

## Beispiel 1

In einem Autoklaven mit einem Fassungsvermögen von 5 l wurden 2 l einer Magnesiumchloridlösung folgender Zusammensetzung

|         | (g/l)  |
|---------|--------|
| $MgCl_2$ | 167,7 |
| $NH_4Cl$ | 28,9  |
| $CaCl_2$ | 0,03  |
| Fe      | 0,005  |

vorgelegt und mit 340 g Ammoniumcarbonat versetzt, wodurch ein Molverhältnis MgO : $CO_2$ im Reaktionsgemisch von 1,0 eingestellt wurde. Anschließend wurde das Reaktionsgemisch unter Rühren auf 180 °C erhitzt; der resultierende Druck betrug 1,9 MPa.

Die Reaktionszeit im Temperaturbereich von 110 bis 180 °C betrug 135 min.

Nach dem Abkühlen wurde die feste Phase abfiltriert und gewaschen; der Gehalt an $MgCl_2$ im Filtrat betrug 8,1 g/l.

Der Filterkuchen wurde der RTG-Feinstrukturanalyse, der Differentialthermoanalyse (DTA), der CTA-Bestimmung und der chemischen Analyse unterzogen. Der Gehalt an Magnesiumcarbonat im Produkt betrug 99,6 Masse-%.

Das Filtrat mit dem Waschwasser wurde in der Wärme mit 175 g calciniertem Magnesit, der 87 Masse-% $MgO$, 4,5 Masse-% $CaO$ und 6,25 Masse-% $Fe_2O_3$ enthielt, zersetzt. Nach dem Auskochen des Ammoniaks und Eindampfen der Lösung auf 2 l enthielt die Lösung 165 g/l $MgCl_2$ und 7,0 g/l $CaCl_2$.

## Beispiel 2

In einem Autoklaven mit einem Fassungsvermögen von 5 l wurden 2 l einer Magnesiumsulfatlösung mit einem Gehalt an $MgSO_4$ von 195 g/l vorgelegt. Die Lösung wurde unter Rühren auf 110 °C erhitzt. Danach wurden Ammoniak und Kohlendioxid in den Reaktionsraum eingeleitet, so daß das Molverhältnis $MgO : CO_2$ im Reaktionsgemisch 0,89 betrug. Anschließend wurde Ammoniak in einem Molverhältnis $NH_3 : CO_2$ von 1,80 zudosiert. Dabei erhitzte sich das Reaktionsgemisch auf 155 °C. Der erzielte Höchstwert des Drucks betrug 3,2 MPa; nach Stabilisierung betrug der Druck 1,6 MPa.

Nach dem Abkühlen wurde die erhaltene feste Phase analysiert; die RTG-Feinstruktur entsprach dem kristallinen $MgCO_3$.

## Beispiel 3

In einem Autoklaven mit einem Fassungsvermögen von 5 l wurden 2 l einer Magnesiumnitratlösung vorgelegt, die 441 g/l $Mg(NO_3)_2$ und 9,40 g/l $Ca(NO_3)_2$ enthielt; danach wurden 880 g Kaliumcarbonat zugesetzt.

Das Reaktionsgemisch, in dem ein Molverhältnis $MgO : CO_2$ von 0,95 vorlag, wurde auf 195 °C erhitzt, wobei ein Druck von 2,1 MPa vorlag, und sogleich aus dem Reaktionsraum entfernt. Die feste Phase enthielt 98,0 Masse-% $MgCO_3$ und 1,8 Masse-% $CaCO_3$. Die Ausbeute an Magnesium betrug 98,2 %.

## Beispiel 4

In einem Autoklaven mit einem Fassungsvermögen von 5 l wurden 2 l einer Suspension von Nesquehonit $MgCO_3 \cdot 3H_2O$ in destilliertem Wasser vorgelegt. Die Feststoffkonzentration der Suspension betrug 150,0 g/l.

Das Reaktionsgemisch, in dem ein Verhältnis $MgO : CO_2$ von 1,0 vorlag, wurde ohne Zusatz weiterer Reagentien erhitzt. Die erzielte Höchsttemperatur betrug 180 °C, wobei ein Druck von 1,6 MPa vorlag.

Nach dem Abkühlen wurde reines $MgCO_3$ erhalten, wie durch RTG-Feinstrukturanalyse nachgewiesen wurde. Die Konzentration an $MgO$ im Filtrat betrug 0,15 g/l.

## Beispiel 5

In einem Autoklaven mit einem Fassungsvermögen von 5 l wurden 2 l einer Suspension von Magnesiumhydroxid in de stilliertem Wasser mit einer Feststoffkonzentration von 100 g/l vorgelegt. Gleichzeitig wurde in den Reaktionsraum Kohlendioxid in einer Menge von 200 g dosiert, so daß das Molverhältnis $MgO : CO_2$ 0,75 betrug.

Nach dem Erhitzen des Reaktionsgemischs auf eine Temperatur von 155 °C betrug der Druck 1,8 MPa.

Nach dem Abkühlen wurde als feste Phase reines wasserfreies Magnesiumcarbonat erhalten. Die Konzentration an $MgO$ in der flüssigen Phase betrug 0,22 g/l.

## Beispiel 6

In einen mit Rührwerk versehenen technischen Reaktor mit einem Fassungsvermögen von 2,8 m$^3$ wurden bei einer Temperatur von 155 °C und einem Druck von 1,2 MPa eine Magnesiumchloridlösung, die 158,2 g/l $MgCl_2$, 0,08 g/l $CaCl_2$ und 28,0 g/l $NH_4Cl$ enthielt, sowie eine Ammoniumcarbonatlösung einer Konzentration von 309 g/l dosiert. Die Zugabe wurde so durchgeführt, daß nach jeweils 10 min 50 l Magnesiumchloridlösung und 20 l Ammoniumcarbonatlösung in den Reaktor eingespritzt wurden, was einem Molverhältnis MgO : $CO_2$ von etwa 1,3 entsprach.

Die abgezogene Suspension wurde filtriert und gewaschen; die feste Phase enthielt 99,2 Masse-% $MgCO_3$; in der Lösung wurde eine Restkonzentration von 48,4 g/l $MgCl_2$ bestimmt.

## Ansprüche

1. Verfahren zur Gewinnung von wasserfreiem Magnesiumcarbonat aus Magnesiumsalzlösungen oder aus Suspensionen von schwerlöslichen Magnesiumverbindungen, basischen Carbonaten, Magnesiumhydroxid udgl. in Wasser oder in Magnesiumsalzlösungen,
**gekennzeichnet durch**

(A) Einstellung eines Molverhältnisses MgO : $CO_2$ im Reaktionsgemisch auf einen Wert $\leq$ 2,0 mit Ammoniumcarbonat, Ammoniumhydrogencarbonat, einem Alkalimetallcarbonat und/oder einem Alkalimetallhydrogencarbonat oder mit Kohlendioxid, ggfs. unter Zugabe von Ammoniak oder einem Alkalimetallhydroxid, in der Lösung oder Suspension,

(B) Erhitzen des Reaktionsgemisches in einem geschlossenem Raum auf eine Temperatur $\geq$ 110 °C und bei einem dieser Temperatur entsprechenden Druck
und

(C) Abtrennung der festen Phase von der Mutterlauge nach Druckausgleich.

2. Verfahren nach Anspruch 1, dadurch gekennzeichnet, daß die Komponenten vor Schritt C vorgewärmt bzw. vorerhitzt werden.

3. Verfahren nach Anspruch 1 oder 2, dadurch gekennzeichnet, daß Schritt C 2 min bis 10 h durchgeführt wird.

4. Verfahren nach einem der Ansprüche 1 bis 3, dadurch gekennzeichnet, daß das ggfs. anwesende Ammoniak und Kohlendioxid nach Druckausgleich in Schritt C durch Absorption aus den Gasen zurückgewonnen werden.

5. Verfahren nach einem der Ansprüche 1 bis 4, dadurch gekennzeichnet, daß die überwiegend Ammoniumsalze enthaltenden Mutterlaugen und Waschwässer mit Calciumhydroxid, mit einem Alkalimetallhydroxid oder mit einem calcinierten magnesiumhaltigen Rohstoff zersetzt werden und das freigesetzte Ammoniak durch Absorption zurückgewonnen wird.

6. Verfahren nach einem der Ansprüche 1 bis 5, dadurch gekennzeichnet, daß die Schritte A, B und/oder C absatzweise durchgeführt werden.

7. Verfahren nach einem der Ansprüche 1 bis 5, dadurch gekennzeichnet, daß die Schritte A, B und/oder C kontinuierlich durchgeführt werden.